# EUROPÄISCHE PATENTSCHRIFT

(11) **EP 0 969 944 B1**
(45) Veröffentlichungstag und Bekanntmachung des Hinweises auf die Patenterteilung: **04.04.2001**
(21) Anmeldenummer: 98908010.6
(22) Anmeldetag: 29.01.1998
(51) Int. Cl.: B23B 27/16, B23C 5/24

(54) **VERSTELLBARER ANSCHLAG**
ADJUSTABLE STOP
BUTEE DEPLACABLE

(30) Priorität: 27.03.1997 DE 19712959; 26.04.1997 DE 19717741
(43) Veröffentlichungstag der Anmeldung: 12.01.2000
(73) Patentinhaber: KENNAMETAL INC., Latrobe, PA 15650 (US)
(72) Erfinder: MÜLLER, Gebhard, D-90766 Fürth (DE); JÄGER, Horst, D-90451 Nürnberg (DE); VOLL, Martin, D-91330 Eggolsheim (DE)
(74) Vertreter: Tergau & Pohl Patentanwälte
(86) Internationale Anmeldenummer: EP9800470
(87) Internationale Veröffentlichungsnummer: WO9843766

(56) Entgegenhaltungen:
- EP-A- 0 713 739
- DE-A- 3 936 243
- DE-U- 9 204 587

## Beschreibung

Die Erfindung bezieht sich auf einen verstellbaren Anschlag für eine in einem Werkzeuggrundkörper justierbar angeordnete Schneidplatte gemäß dem Oberbegriff des Anspruchs 1.

Ein derartiger verstellbarer Anschlag ist z.B. aus der deutschen Offenlegungsschrift DE 42 43 586 A1 bekannt. Der Anschlag dient zur Justierung eines in einem Führungsschlitz eines Grundkörpers geführten Schneidkörpers in Form eines Messers. Er umfaßt einen über seine gesamte Länge hohlzylindrischen Anschlagkörper, dessen geschlitzter Kopf mittels einer Justierschraube zur Verschiebung des Schneidkörpers radial aufgeweitet werden kann. Dazu ist der Anschlagkörper in eine im Grundkörper vorgesehene Stufenbohrung eingesetzt, wobei der sich bis zur Stirnfläche des Grundkörpers erstreckende und geschlossen umlaufende weitere Bereich der Stufenbohrung den Justierhub vorgibt.

Aufgrund der unterschiedlichen Krümmungsradien des Anschlagkörpers einerseits und der Stufenbohrung in dessen weiteren Bereich andererseits wird lediglich eine Punktberührung sowohl an der dem Schneidkörper zugewandten Anschlagseite als auch an der dieser gegenüberliegenden und dem Grundkörper zugewandten Anlageseite erreicht. Dies hat den Nachteil, daß bereits bei niedrigen Klemm- oder Zerspankräften aufgrund einer hohen örtlichen Spannungskonzentration eine Überlastung des Anschlags eintritt. Dies wiederum kann zu einem Verlust der Positioniergenauigkeit und/oder der Stabilität führen. Da zudem das die Justierschraube führende Innengewinde entlang des geschlitzten Bereichs einer für die jeweilige Justierung erforderlichen Verstellbewegung folgt und demzufolge in diesem Bereich kein schlüssiger Gewindeeingriff mehr vorliegt, ist die Belastbarkeit dieser geschraubten Verbindung, insbesondere bei maximaler Verstellung, nur begrenzt.

Der Erfindung liegt daher die Aufgabe zugrunde, einen verstellbaren Anschlag für eine in einem Werkzeuggrundkörper justierbar angeordnete Schneidplatte anzugeben, bei dem die Belastbarkeit der Verbindung zwischen einer Jusiterschraube und einem diese führenden Gewinde besonders hoch ist.

Diese Aufgabe wird erfindungsgemäß gelöst durch die Merkmale des Anspruchs 1. Dabei ist ein in eine Längsbohrung des Anschlagkörpers einsetzbarer Hülsenkörper vorgesehen, der ein mit der Justierschraube in Eingriff bringbares Innengewinde trägt.

In zweckmäßiger Ausgestaltung ist die Längsbohrung des Anschlagkörpers am stirnseitigen Anschlagende mit einer kegelförmigen Innenfläche (Innenkonus) versehen, an die sich ein Aufnahmebereich für den Hülsenkörper anschließt. Durch diese kegelförmige Ausgestaltung des Kopfbereichs des Anschlagkörpers ist eine besonders feinjustierbare Verstellung der Schneidplatte möglich. Durch die Anordnung mehrerer Querschlitze, die die Querschnittsfläche des Anschlagkörpers vorzugsweise gleichmäßig in Segmente unterteilen, kann die Wirkrichtung des Aufspreizens gesteuert werden. So können z. B. bei drei Querschlitzen an der dem Schneidkörper zugewandten Anschlagseite des Anschlagkörpers zwei zueinander im spitzen Winkel stehende Wirkrichtungen realisiert werden. Jeder Querschlitz weist dabei zweckmäßigerweise an dessen innerem Endbereich eine Erweiterungsbohrung auf.

Der Hülsenkörper ist zweckmäßigerweise von der der Einschraubseite für die Justierschraube gegenüberliegenden Stirnseite her in die Längsbohrung des Anschlagkörpers einsetzbar. Der Hülsenkörper ist an dessen dortigem Freiende vorteilhafterweise kragenförmig ausgestellt, wobei mindestens ein Kragenteil eines entsprechenden Haltekragens mit einer in der Verlängerung des Querschlitzes des Anschlagkörpers vorgesehenen Stützschulter in Form einer Ausnehmung in Eingriff bringbar ist. Dadurch wird in einfacher Weise sowohl eine axiale Halterung als auch eine Verdrehsicherung des Hülsenkörpers gegenüber dem Anschlagkörper erzielt.

Unterhalb des Kopfendes des Anschlagkörpers ist zwischen diesem und dem Hülsenkörper ein Freistellbereich vorgesehen, so daß das Innengewinde einer Verstellbewegung besonders gut folgen kann. Dabei ist eine entsprechende Aussparung zur Realisierung des Freistellbereichs am innenliegenden Hülsenende vorgesehen, so daß dort der Außendurchmesser des Hülsenkörpers um den Freistellbetrag kleiner ist als der Innendurchmesser des Anschlagkörpers.

Analog ist in zweckmäßiger Weiterbildung des Anschlagkörpers in dessen Aussenmantel eine den Justierhub begrenzende oder diesen vorgebende Aussparung vorgesehen. Diese Aussparung bestimmt wiederum den Freistellbetrag für eine maximale Verstellung. Der Anschlagkörper ist weiterhin zweckmäßigerweise an dessen dem Grundkörper zugewandten Anlageseite abgerundet, wobei diese Anlage der Rundform zumindest angenähert ist. Durch diese abgerundete oder halbrunde Anlageseite ist zusätzlich zu einer einfachen Herstellbarkeit ein besonders genaues Positionieren und radiales Ausrichten der Berührungsfläche zwischen dem Anschlagkörper und dem Werkzeuggrundkörper beim Justieren oder Festsetzen ermöglicht.

Dem gegenüber ist die der Schneidplatte zugewandte Anschlagseite des Anschlagkörpers geradlinig ausgebildet, so daß eine flächige Berührung zwischen Schneidplatte und Anschlagkopf des Anschlagkörpers erzielt wird. Die Anschlagseite ist dabei vorteilhafterweise kragenförmig ausgestellt, wobei die mit der Schneidplatte in Berührung bringbare Anschlagfläche zur kopfseitigen Stirnfläche des Anschlagkörpers hin geneigt ist. Dadurch ist die Anschlag- oder Berührungsfläche mit der Schneidplatte gegenüber einer senkrechten Flächenausrichtung vergrößert. Außerdem ergibt sich ein zusätzlicher Halt zwischen Schneidplatte und Anschlagkörper in der Art einer Verkeilung.

Zur Halterung des Anschlagkörpers im Werkzeuggrundkörper kann dieser verschraubt, verstiftet oder geklemmt sein. Auch kann der Anschlagkörper mit dem Werkzeuggrundkörper stoffschlüssig verbunden sein. Zweckmäßigerweise ist zur Fixierung des Anschlagkörpers im Werkzeuggrundkörper jedoch ein Rastkörper in Form einer Kugel vorgesehen. Dazu weist der Anschlagkörper mindestens eine Querbohrung zur Aufnahme eines solchen Rastkörpers auf. Ebenso weist der Hülsenkörper zweckmäßigerweise eine mit der Querbohrung des Anschlagkörpers in Überdeckung bringbare korrespondierende Querbohrung auf.

Bei eingesetztem Hülsenkörper in den Anschlaggrundkörper erfolgt die Verrastung des oder jedes Rastkörpers zweckmäßigerweise mittels eines Schraubenschaftes in Form einer sogenannten Madenschraube, die in einem Fortsatz des Innengewindes des Hülsenkörpers vorgesehen ist. Der Schraubenschaft dient zur radialen Auslenkung des Rastkörpers in eine Wandausnehmung der Längsbohrung des Anschlagkörpers. Dabei wird der oder jeder Rastkörper beim Eindrehen des Schraubenschaftes aus dem Zentrum in Richtung der Bohrungswand gedrückt. Der Rastkörper greift dabei derart in die Wandausnehmung ein, daß ein form- und kraftschlüssiger Verbund entsteht.

Die Justierschraube weist zweckmäßigerweise einen konisch ausgebildeten Senkkopf auf, an den sich ein taillierter Schraubenhals anschließt. Die Gesamtlänge der Schraube ist dabei zweckmäßigerweise kleiner als die Tiefe des oder jedes Querschlitzes. Dabei liegt vorteilhafterweise auch bei eingeschraubter Justierschraube deren Kegelansatz am Gewindeende stets oberhalb der Erweiterungsbohrung des Querschlitzes. Die taillierte Ausgestaltung des Schraubenhalses ermöglicht eine bei der Verstellung sich besonders vorteilhaft auswirkende elastische Verformung des konischen Schraubenkopfes gegenüber dem Gewindeschaft. Der Justierschraubenkopf kann somit der Verstellbewegung besonders gut folgen. Darüber hinaus erfolgt auch eine Bewegung des Gewindeschaftes und des Hülsenkörpers in Richtung der radialen Auslenkung, wodurch eine geforderte Verstellung besonders zuverlässig erzielt wird. Der Hülsenkörper kann somit zusammen mit der Justierschraube der Verstellbewegung folgen. Dadurch ist sichergestellt, daß das Gewinde der Justierschraube unabhängig vom Justierhub stets mit dem korrespondierenden Innengewinde des Hülsenkörpers in Eingriff ist.

Die mit der Erfindung erzielten Vorteile bestehen insbesondere darin, daß durch den Einsatz eines in den Anschlagkörper einschiebbaren und das Innengewinde für die Justierschraube tragenden Hülsenkörpers eine besonders sichere und zuverlassige Befestigung der Justierschraube gewährleistet ist. Zudem ist die Belastbarkeit dieser Verbindung, insbesondere bei maximaler Verstellung der Schneidplatte, deutlich verbessert. Weiter wird mit der im Vergleich zur Schraubenlänge großen Querschlitztiefe eine besonders große Biegelänge und eine sehr gut steuerbare Biegefestigkeit (Biegequerschnitt) erzielt. Ferner wird aufgrund der Querschnittsform des Anschlagkörpers mit einer abgerundeten Anlageseite und einer geradlinigen Anschlagseite eine flächige Anlage am Schneidkorper erzielt. Außerdem ist durch den in Bewegungsrichtung mitwandernden Hülsenkörper die Biegebeanspruchung der als Senkkopfschraube ausgebildeten Justierschraube reduziert, so daß ein besonders großer Verstellhub möglich ist.

Nachfolgend werden Ausführungsbeispiele der Erfindung anhand einer Zeichnung näher erläutert. Darin zeigen:
- Fig. 1: in perspektivischer Explosionsdarstellung einen verstellbaren Anschlag mit einem Anschlagkörper und einem Hülsenkörper,
- Fig. 2: im Längsschnitt den Anschlag gemäß Fig. 1 mit eingesetztem Hülsenkörper,
- Fig. 3: im Ausschnitt einen Werkzeuggrundkörper mit eingesetztem Anschlag und eingesetzter Justierschraube,
- Fig. 4: im Längsschnitt den Anschlag mit zwei eingerasteten Kugeln und
- Fig. 5 und 6: in Draufsicht zwei Ausführungsvarianten des Anschlags mit zwei bzw. drei Querschlitzen.

Einander entsprechende Teile sind in allen Figuren mit den gleichen Bezugszeichen versehen.

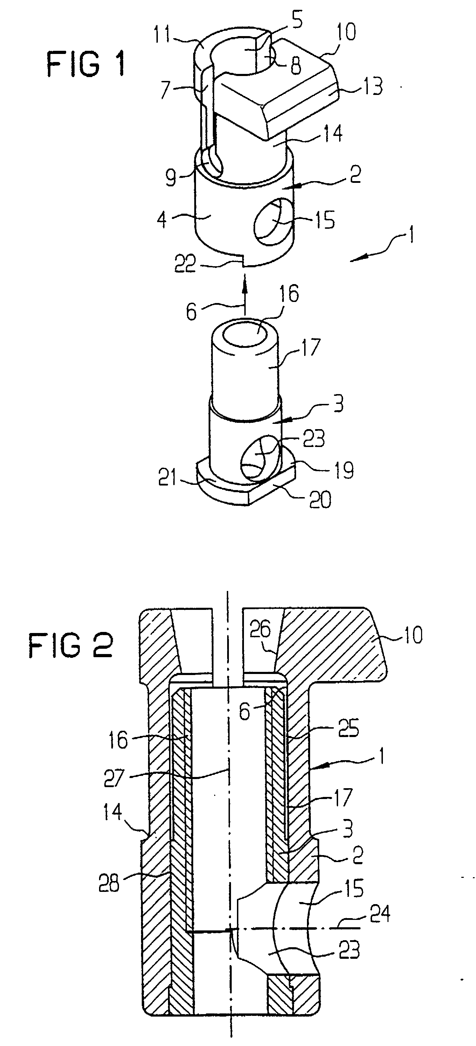

Fig. 1 zeigt einen verstellbaren Anschlag 1 mit einem spreizbaren Anschlagkörper 2 und mit einem Hülsenkörper 3, der von dessen Freiende 4 her in eine Längsbohrung 5 des Anschlagkörpers 2 einsteckbar ist. Die Einsteckrichtung ist durch den Pfeil 6 angedeutet. Der Anschlagkörper 2 ist quergeschlitzt, wobei sich die gegenüberliegenden Querschlitze 7 und 8 über etwa die Hälfte der axialen Länge des Anschlagkörpers 2 erstrecken und im Endbereich in eine Erweiterungsbohrung münden, von denen lediglich die dem Querschlitz 7 zugeordnete Erweiterungsbohrung 9 sichtbar ist. Die Querschlitze 7 und 8 teilen den Anschlagkörper 2 im Bereich dessen Kopfendes 10 in einen Anlagebereich 11 und einen Anschlagbereich 12 auf. Während der Anlagebereich 11 abgerundet oder halbrund ausgebildet ist, ist der Anschlagbereich 12 unter Bildung einer ebenen, schräg angestellten Anschlag- oder Berührungsfläche 13 kragenförmig ausgebildet. An das kragenförmige Kopfende 10 des Anschlagkörpers 2 schließt sich eine mantelseitig umlaufende Aussparung 14 an, die sich bis zum Endbereich der Querschlitze 7, 8 erstreckt, so daß zwischen dem Kopfende 10 und dem Freiende 4 im Außenmantel des hohlzylindrischen Anschlagkörpers 2 ein rückversetzter Mittenbereich gebildet ist. Im Bereich des Freiendes 4 ist eine mit dem Anschlagbereich 12 fluchtende Querbohrung 15 vorgesehen.

Der ebenfalls hohlzylindrisch ausgebildete Hülsenkörper 3 trägt ein Innengewinde 16. Der Hülsenkörper 3 ist mantelseitig stufenförmig ausgebildet, wobei sich entgegen der Einschubrichtung 6 an einen schmalen Freistellabschnitt oder Freistellbereich 17 ein mantelseitig an den Innendurchmesser der Längsbohrung 5 angenäherter Paßbereich 18 anschließt. An den Paßbereich 18 schließt sich ein Haltekragen 19 am Freiende 20 des Hülsenkörpers 3 an. Der Haltekragen 19 ist derart ausgebildet, daß zwei gegenüberliegende, abgerundete Kragenteile 21 im eingesetzten Zustand des Hülsenkörpers 3 jeweils mit einer korrespondierenden Randausnehmung 22 am Freiende 4 des Anschlagkörpers 14 formschlüssig in Eingriff sind. Dadurch ist im Montagezustand eine Verdrehsicherung des Hülsenkörpers 3 gegenüber dem Anschlagkörper 2 gewährleistet. Der Hülsenkörper 3 weist im Paßbereich 18 eine zur Querbohrung 15 des Anschlagkörpers 14 korrespondierende Querbohrung 23 auf.

Fig. 2 zeigt den Anschlag 1 im Längsschnitt mit in die Längsbohrung 5 des Anschlagkörpers 2 eingesetztem Hülsenkörper 3. Das Innengewinde 16 des Hülsenkörpers 3 erstreckt sich bis mindestens zur Bohrungsachse 24 der Querbohrungen 15 und 23. Der Anschlagkörper 2 und der Hülsenkörper 3 sind zueinander koaxial angeordnet, wobei entlang des Freistellbereichs 17 zwischen dem Hülsenkörper 3 und dem Anschlagkörper 2 ein Ringraum 25 zur radialen Auslenkung des Hülsenkörpers 3 gebildet ist. Die Längsbohrung 5 geht im Bereich des Kopfendes 10 des Anschlagkörpers 2 über in eine kegelförmige Innenoberfläche zur Bildung eines sich in Richtung der Längsachse 27 des Anschlags 1 verjüngenden Innenkonus 26. Der Bereich unterhalb dieses Innenkonus 26 der Längsbohrung 5 bildet somit den Aufnahmebereich oder Aufnahmeraum 28 des Anschlagkörpers 2 für den Hülsenkörper 3.

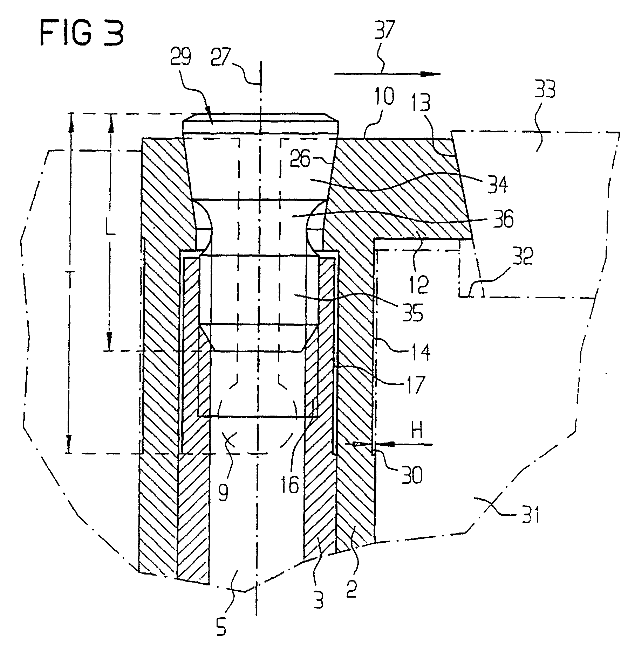

Fig. 3 zeigt den verstellbaren Anschlag 1 im Montagezustand mit eingesetzter Verstell-oder Justierschraube 29. Dazu ist der Anschlag 1 in eine Aufnahmebohrung 30 eines Werkzeuggrundkörpers 31 eingesetzt. Dabei ist der Anschlagbereich 12 am Kopfende 10 des Anschlagkörpers 2 gegen einen in einem Führungsschlitz 32 des Werkzeuggrundkörpers 31 verschiebbar angeordneten Schneidkörper 33 geführt, so daß die Anschlagfläche 13 am Schneidkörper 33 anliegt. Aufgrund des abgerundeten Anlagebereichs 11 an der Innenwandung der Aufnahmebohrung 30 des Werkzeuggrundkörpers 31 wird in einfacher Weise eine radiale Ausrichtung des Anschlagkörpers 2 gegenüber dem Werkzeuggrundkörper 31 mit im Ergebnis vollflächiger Anlage des Anschlagbereichs 12 des Anschlagkörpers 2 am Schneidkörper 33 erzielt.

Die Justierschraube 29 weist einen kegelförmigen Senkkopf 34 mit an den Innenkonus 26 angepaßter Außenkontur auf. Sie ist im Bereich zwischen dem Senkkopf 34 und einem Gewindeschaft 35 mit einem gewindefreien, taillierten Schraubenhals 36 versehen, so daß eine elastische Verformung des Senkkopfes 34 gegenüber dem Gewindeschaft 35 möglich ist. Dabei übersteigt die Schlitztiefe T der Querschlitze 7, 8 die gesamte Schraubenlänge L. Dadurch, daß die Querschlitze 7, 8 in Richtung der Längsachse 27 über die Gesamtlänge L der Justierschraube 29 hinausgehen und am Freiende 4 des Anschlagkörpers 2 begrenzt sind, werden eine große Biegelänge und eine sehr gut steuerbare Biegefestigkeit mit einem besonders günstigen Biegequerschnitt erzielt.

Die Tiefe der Aussparung 14 im Mittenbereich des Anschlagkörpers 2 gibt den maximalen Justierhub H des Anschlags 1 im Grundkörper 31 vor. Je tiefer diese Aussparung 14 ist, desto größer ist auch der Justierhub H. Die fertigungstechnisch bedingte Weiterführung der umlaufenden Aussparung 14 ist im Anlagebereich 11 wirkungslos, da sowohl dieser als auch das Freiende 4 an der Innenwand der Bohrung 30 des Werkzeuggrundkörpers 31 unmittelbar anliegen. Beim Eindrehen der Justierschraube 29 Hülsenkörper 3 erfolgt somit lediglich eine Auslenkung des Kopfendes 10 und des sich daran anschließenden ausgesparten Teils des Anschlagkörpers 2 in radialer Verstellrichtung 37 quer zur Längsachse 27 des Anschlags 1.

Das sowohl zur Führung als auch zur Befestigung der Justierschraube 29 dienende Innengewinde 16 des Hülsenkörpers 3 bleibt während einer Verstellbewegung auch bis zum maximalen Justierhub H mit dem Gewindeschaft 35 der Justierschraube 29 stets in form- und kraftschlüssigem Eingriff. Die Belastbarkeit dieser Gewindeverbindung ist somit deutlich verbessert. Die Freistellung innerhalb des Freistellbereichs 17 zwischen dem Hülsenkörper 3 und dem Anschlagkörper 2 bewirkt darüber hinaus, daß das Innengewinde 16 der Verstellbewegung besonders gut folgen kann, da sich der Hülsenkörper 3 in Verstellrichtung 37 bewegen kann.

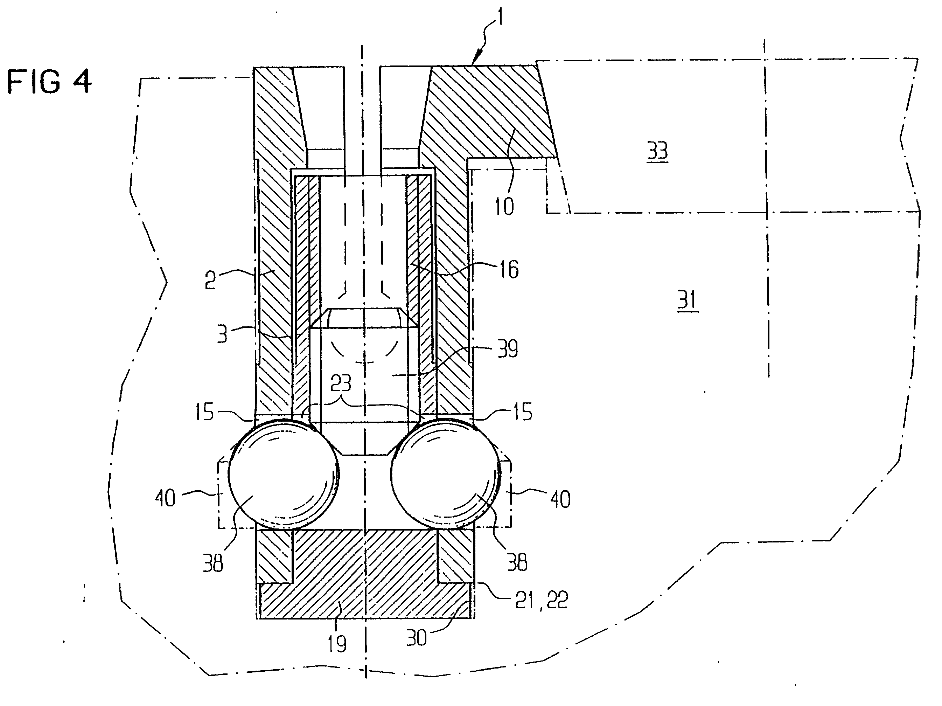

In Fig. 4 ist der verstellbare Anschlag 1 mit zwei Rastkörpern in Form von Kugeln 38 dargestellt. Der oder jeder Rastkörper 38 dient zum Festsetzen des Anschlags 1 im Werkzeuggrundkörper 31. Bei diesem Haltemechanismus sind die Kugeln 38 in den Querbohrungen 15, 23 des Anschlagkörpers 2 bzw. des Hülsenkörpers 3 und damit quer zur Einschubrichtung 6 des Anschlags 1 gelagert. Sie werden mittels einer Madenschraube in Form eines Gewindeschaftes 39 aus dem Zentrum in bzw. gegen die Verstellrichtung 37 zur Bohrungswand der Aufnahmebohrung 30 des Werkzeuggrundkörpers 31 gedrückt, wobei der Gewindeschaft 39 im Fortsatz des Innengewindes 16 des Hülsenkörpers 3 sitzt. Die Bohrungswand der Bohrung 30 ist dort jeweils mit einer Ausnehmung 40 versehen, in die die Kugeln 39 derart in Eingriff gelangen, daß ein form- und kraftschlüssiger Verbund entsteht.

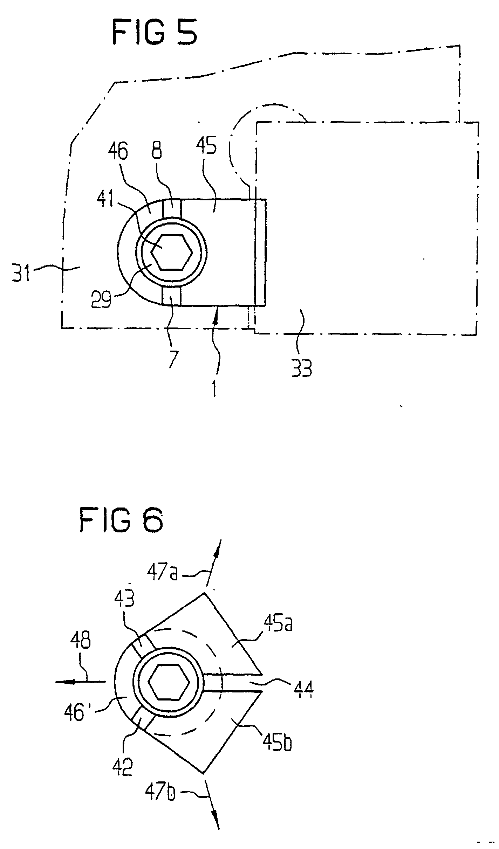

Fig. 5 zeigt in einer Draufsicht den Anschlag 1 im Montagezustand mit am Schneidkörper 33 anliegendem geradlinigen Anschlagbereich 12 und mit am Werkzeuggrundkörper 31 anliegendem abgerundeten Anlagebereich 11. Die Justierschraube 29 ist im Ausführungsbeispiel mit einem Sechskantloch 41 versehen. Anstelle des Sechskantloches 41 kann auch ein Längsschlitz oder Kreuzschlitz vorgesehen sein.

Während im Ausführungsbeispiel gemäß Fig. 5 der geschlitzte Anschlagkörper 2 lediglich zwei Querschlitze 7,8 aufweist, ist dieser im Ausführungsbeispiel gemäß Fig. 6 mit drei Querschlitzen 42, 43, 44 versehen. Dieser Anschlag 1 ist somit im Unterschied zum Ausführungsbeispiel gemäß Fig. 5 nicht nur in zwei Segmente 45, 46, sondern in drei Segmente 45a, 45b und 46' unterteilt. Dadurch wird eine weitere Wirkrichtung realisiert, so daß beim Anschlag 1 gemäß Fig. 6 insgesamt drei Wirkrichtungen 47a, 47b und 48 realisiert-sind. Die Wirkrichtung des Aufspreizens kann somit über die Anzahl und über die symmetrische (Fig. 5) oder sternförmige (Fig. 6) Anordnung der Querschlitze 7, 8 bzw. 42 bis 44 gesteuert werden. Bei z.B. vier Querschlitzen würde dann in nicht näher dargestellter Art und Weise zweckmäßigerweise eine kreuzförmige Querschlitzanordnung gewählt werden.

### Bezugszeichenliste

- 1: Verstellbarer Anschlag
- 2: Anschlagkorper
- 3: Hülsenkörper
- 4: Freiende
- 5: Längsbohrung
- 6: Einsteckrichtung
- 7, 8: Querschlitz
- 9: Erweiterungsbohrung
- 10: Kopfende
- 11: Anlagebereich
- 12: Anschlagbereich
- 13: Anschlag-/Berührungsfläche
- 14: Aussparung
- 15: Querbohrung
- 16: Innengewinde
- 17: Freistellbereich
- 18: Paßbereich
- 19: Haltekragen
- 20: Freiende
- 21: Kragenteil
- 22: Randausnehmung
- 23: Querbohrung
- 24: Bohrungsachse
- 25: Ringraum

## Patentansprüche

1. Verstellbarer Anschlag für einen in einem Werkzeuggrundkörper (31) justierbar angeordneten Schneidkörper (33), mit einem geschlitzten und mittels einer Justierschraube (29) aufspreizbaren hohlzylindrischen Anschlagkörper (2),
gekennzeichnet durch
einen in eine Längsbohrung (5) des Anschlagkörpers (2) einsetzbaren Hülsenkörper (3), der ein mit der Justierschraube (29) in Eingriff bringbares Innengewinde (16) aufweist.

2. Anschlag nach Anspruch 1,
dadurch gekennzeichnet,
daß die Längsbohrung (5) am stirnseitigen Kopfende (10) des Anschlagkörpers (2) einen Innenkonus (26) aufweist, an die sich ein Aufnahmebereich (28) für den Hülsenkörper (3) anschließt.

3. Anschlag nach Anspruch 1 oder 2,
gekennzeichnet durch
mindestens zwei die stirnseitige Querschnittsfläche des Anschlagkörpers (2) in Segmente (45, 46) unterteilende Querschlitze (7, 8 bzw. 42 bis 44), von denen jeder an dessen innerem Endbereich eine Erweiterungsbohrung (9) aufweist.

4. Anschlag nach einem der Ansprüche 1 bis 3,
dadurch gekennzeichnet,
daß der Hülsenkörper (3) am Freiende (20) einen mit einer Randausnehmung (22) des Anschlagkörpers (2) in Eingriff bringbaren Haltekragen (19, 21) aufweist.

5. Anschlagkörper nach einem der Ansprüche 1 bis 4,
dadurch gekennzeichnet,
daß unterhalb des Kopfendes (10) des Anschlagkörpers (2) zwischen diesem und dem Hülsenkörper (3) ein Freistellbereich (17) vorgesehen ist.

6. Anschlag nach Anspruch 5,
dadurch gekennzeichnet,
daß der Hülsenkörper (3) mantelseitig stufenförmig ausgebildet ist, wobei sich an den Freistellbereich (17) ein an die Längsbohrung (5) angenäherter Paßbereich (18) anschließt.

7. Anschlag nach einem der Ansprüche 1 bis 6,
dadurch gekennzeichnet,
daß der Anschlagkörper (2) mantelseitig eine den Justierhub (H) vorgebende Aussparung (14) aufweist.

8. Anschlag nach einem der Ansprüche 1 bis 7,
dadurch gekennzeichnet,
daß der Anschlagkörper (2) einen dem Grundkörper (31) zugewandten abgerundeten Anlagebereich (11) aufweist.

9. Anschlag nach einem der Ansprüche 1 bis 8,
dadurch gekennzeichnet,
daß der Anschlagkörper (2) einen kragenförmig ausgestellten und dem Schneidkörper (33) zugewandten geradlinigen Anschlagbereich (12) aufweist.

10. Anschlag nach einem der Ansprüche 1 bis 9,
dadurch gekennzeichnet,
daß der Anschlagkörper (2) mindestens eine Querbohrung (15) zur Aufnahme eines radial verschiebbaren Rastkörpers (38) aufweist.

11. Anschlag nach Anspruch 10,
dadurch gekennzeichnet,
daß der Hülsenkörper (3) eine mit der Querbohrung (15) des Anschlagkörpers (2) in Überdeckung bringbare korrespondierende Querbohrung (23) aufweist.

12. Anschlag nach Anspruch 10 oder 11,
gekennzeichnet durch
einen im Innengewinde (16) vorgesehenen Gewindeschaft (39) zur radialen Auslenkung des Rastkörpers (38) in eine Wandausnehmung (40) der Längsbohrung (5) des Anschlagkörpers (2).

13. Anschlag nach einem der Ansprüche 1 bis 12,
dadurch gekennzeichnet,
daß die Justierschraube (29) einen konisch ausgebildeten Senkkopf (34) und einen taillierten Schraubenhals (36) aufweist.

14. Anschlag nach einem der Ansprüche 1 bis 13,
dadurch gekennzeichnet,
daß die Tiefe (T) des Querschlitzes (7, 8; 42 bis 44) die Gesamtlänge (L) der Justierschraube (29) übersteigt.

## Claims

1. Adjustable stop for a cutting body (33) arranged so as to be adjustable in a tool parent body (31), having a slotted, hollow-cylindrical stop body (2) which can be expanded by means of an adjusting screw (29), characterized by a sleeve body (3) which can be inserted into a longitudinal bore (5) of the stop body (2) and has an internal thread (16) which can be brought into engagement with the adjusting screw (29).

2. Stop according to Claim 1, characterized in that the longitudinal bore (5) has an internal taper (26) at the front head end (10) of the stop body (2), adjoining which internal taper (10) is a locating region (28) for the sleeve body (3).

3. Stop according to Claim 1 or 2, characterized by at least two transverse slots (7, 8 and 42 to 44 resp.) which subdivide the front-end cross-sectional area of the stop body (2) into segments (45, 46) and of which each has a widening bore (9) at its inner end region.

4. Stop according to one of Claims 1 to 3, characterized in that the sleeve body (3), at the free end (20), has a retaining collar (19, 21) which can be brought into engagement with a marginal recess (22) of the stop body (2).

5. Stop according to one of Claims 1 to 4, characterized in that a clearance region (17) is provided below the head end (10) of the stop body (2) between the latter and the sleeve body (3).

6. Stop according to Claim 5, characterized in that the sleeve body (3) is of stepped design at the circumference, a fitting region (18) approximated to the longitudinal bore (5) adjoining the clearance region (17).

7. Stop according to one of Claims 1 to 6, characterized in that the stop body (2) has a recessed portion (14) at the circumference, this recessed portion (14) predetermining the adjusting stroke (H).

8. Stop according to one of Claims 1 to 7, characterized in that the stop body (2) has a rounded-off bearing region (11) facing the parent body (31).

9. Stop according to one of Claims 1 to 8, characterized in that the stop body (2) has a rectilinear stop region (12) made in a collar shape and facing the cutting body (33).

10. Stop according to one of Claims 1 to 9, characterized in that the stop body (2) has at least one transverse bore (15) for receiving a radially displaceable catch body (38).

11. Stop according to Claim 10, characterized in that the sleeve body (3) has a corresponding transverse bore (23) which can be brought into line with the transverse bore (15) of the stop body (2).

12. Stop according to Claim 10 or 11, characterized by a threaded shank (39) which is provided in the internal thread (16) and is intended for the radial deflection of the catch body (38) into a wall recess (40) of the longitudinal bore (5) of the stop body (2).

13. Stop according to one of Claims 1 to 12, characterized in that the adjusting screw (29) has a conically designed countersunk head (34) and a reduced screw neck (36).

14. Stop according to one of Claims 1 to 13, characterized in that the depth (T) of the transverse slot (7, 8; 42 to 44) exceeds the overall length (L) of the adjusting screw (29).

## Revendications

1. Butée réglable pour un organe de coupe (33) monté de manière à être réglable dans un corps de base d'outil (31), comportant un corps de butée cylindrique creux fendu (2), pouvant être dilaté au moyen d'une vis d'ajustement (29), caractérisée par
un corps de douille (3), qui peut être inséré dans un perçage longitudinal (5) du corps de butée (2) et possède un taraudage (16) pouvant être amené en prise avec la vis d'ajustement (29).

2. Butée selon la revendication 1, caractérisée en ce
que le perçage longitudinal (5) situé sur l'extrémité de tête frontale (10) du corps de butée (2) possède un cône intérieur (26), auquel se raccorde une partie (28) de réception pour le corps de douille (3).

3. Butée selon la revendication 1 ou 2, caractérisée par
au moins deux fentes transversales (7,8 ou 42 à 44), qui divisent la surface frontale en coupe transversale du corps de butée (2) en segments (45,46), dont chacun possède un perçage d'élargissement (9) au niveau de sa partie d'extrémité inférieure.

4. Butée selon l'une des revendications 1 à 3, caractérisée en ce
que le corps de douille (3) possède sur l'extrémité libre (20) un collet de retenue (19,21) pouvant être amené en prise avec un évidement marginal (22) du corps de butée (2).

5. Butée selon l'une des revendications 1 à 4, caractérisée en ce
qu'une zone de dégagement (17) est prévue au-dessous de l'extrémité de tête (10) du corps de butée (2) entre ce dernier et le corps de douille (3).

6. Butée selon la revendication 5, caractérisée en ce
que le corps de douille (3) est agencé avec une forme étagée au niveau de son enveloppe, une zone de l'installation (18), qui est proche du perçage longitudinal (5), se raccordant à la partie de dégagement (17).

7. Butée selon l'une des revendications 1 à 6, caractérisée en ce
que le corps de butée (2) comporte, sur son enveloppe, un évidement (14) qui fixe par avance la course d'ajustement (H).

8. Butée selon l'une des revendications 1 à 7, caractérisée en ce
que le corps de butée (2) possède une partie d'application arrondie (11), tournée vers le corps de base (31).

9. Butée selon l'une des revendications 1 à 8, caractérisée en ce
que le corps de butée (2) possède une zone de butée rectiligne (12), ressortie en forme de collet et tournée vers l'organe de coupe (33).

10. Butée selon l'une des revendications 1 à 9, caractérisée en ce
que le corps de butée (2) possède au moins un perçage transversal (15) servant à loger un organe d'encliquetage (38) déplaçable radialement.

11. Butée selon la revendication 10, caractérisée en ce
que le corps de douille (3) possède un perçage transversal correspondant (23), qui peut être amené en recouvrement avec le perçage transversal (15) du corps de butée (2).

12. Butée selon la revendication 10 ou 11, caractérisée par
une tige filetée (39) prévue dans le taraudage (16) et servant à faire dévier radialement l'organe d'encliquetage (38) dans un évidement de paroi (40) du perçage longitudinal (5) du corps de butée (2).

13. Butée selon l'une des revendications 1 à 12, caractérisée en ce
que la vis d'ajustement (29) possède une tête fraisée (34) de forme conique et un collet de vis (36) réalisé en forme de gorge.

14. Butée selon l'une des revendications 1 à 13, caractérisé en ce
que la profondeur (T) de la fente transversale (7,8; 42 à 44) dépasse la longueur totale (L) de la vis d'ajustement (29).
